# EUROPÄISCHE PATENTSCHRIFT

(11) **EP 2 084 036 B1**
(45) Veröffentlichungstag und Bekanntmachung des Hinweises auf die Patenterteilung: **12.10.2016**
(21) Anmeldenummer: 07786116.9
(22) Anmeldetag: 17.07.2007
(51) Int. Cl.: B60R 7/02, B60R 5/04, B60R 11/00

(54) **STAUFACHEINRICHTUNG FÜR FAHRZEUGE**
STORAGE COMPARTMENT DEVICE FOR VEHICLES
ENSEMBLE DE VIDE-POCHES POUR VÉHICULES

(30) Priorität: 21.10.2006 DE 102006049750
(43) Veröffentlichungstag der Anmeldung: 05.08.2009
(73) Patentinhaber: Audi AG, 85045 Ingolstadt (DE)
(72) Erfinder: MEISEL, Michael, 85055 Ingolstadt (DE); STAUFER, Werner, 85051 Ingolstadt (DE)
(74) Vertreter: Mader, Wilfried
(86) Internationale Anmeldenummer: PCT/EP2007/006316
(87) Internationale Veröffentlichungsnummer: WO 2008/046461

(56) Entgegenhaltungen:
- EP-A- 1 332 919
- EP-A- 1 728 683
- EP-A- 1 728 685
- EP-A1- 0 556 100
- DE-A1- 4 442 042
- DE-A1- 10 332 983
- DE-A1- 19 946 629
- DE-A1-102005 012 008
- FR-A1- 2 876 641
- US-B1- 6 712 415

## Beschreibung

Die vorliegende Erfindung betrifft ein Fahrzeug mit einer als Staufacheinrichtung ausgebildeten Funktionseinrichtung nach dem Oberbegriff des Anspruchs 1. Beispeilhaft hirza ist die EP 0556 100 A1. Die Erfindung findet insbesondere Anwendung im Automobil-Bereich,

Aus der EP 1 332 919 A2 ist eine Aufnahmevorrichtung für einen Laderaum eines Kraftfahrzeugs bekannt. Die seitlich im Fahrzeug befestigte Aufnahmevorrichtung weist Aufnahmetaschen mit sich wenigstens in den Bodenbereich erstreckenden Faltgebilden auf.

Im Stand der Technik ist es bekannt Stauvorrichtungen zur Aufnahme von Gegenständen in Fahrzeugen anzuordnen. Es gibt hierzu zahlreiche Ausführungen, die in Kraftfahrzeugen zur Anwendung kommen. Diese sind beispielsweise Handschuhfächer, Türablagen oder Schubfächer. Die bekannten Vorrichtungen weisen jedoch bestimmte Nachteile auf. So sind viele Vorrichtungen in Ihrer Grösse vorgegeben und lassen sich gar nicht oder nur unzureichend an die jeweiligen Bedürfnisse anpassen. Daneben ist auch die Bedienbarkeit bekannter Stauvorrichtungen und deren Kundennutzen verbesserungsfähig. So ist es wünschenswert eine Stauvorrichtung in einem möglichst kleinen Bauraum unterzubringen, wenn diese nicht benötigt wird, um mehr Nutzraum im Fahrzeug bereitzustellen.

Hiervon ausgehend ist es Aufgabe der vorliegenden Erfindung eine Vorrichtung anzugeben, die gegenüber dem bekannten Stand der Technik einen besonders hohen Kundennutzen bei einfacher Bedienbarkeit aufweist.

Diese Aufgaben werden gelöst mit einer Vorrichtung gemäss den Merkmalen des Patentanspruchs 1. Weitere vorteilhafte Ausgestaltungen der Vorrichtung sind in den abhängig formulierten Patentansprüchen angegeben.
Zur Lösung dieser Aufgabe ist eine Funktionseinrichtung für Fahrzeuge vorgesehen, die wenigstens zwei Abschnitte aufweist. Die Funktionseinrichtung ist dabei insbesondere zur Anordnung in einem Fahrzeuginnenraum geeignet, wobei relativ zum Fahrzeug ein erster Abschnitt unbeweglich und ein zweiter Abschnitt beweglich angeordnet ist. Darüber hinaus sind bei der Funktionseinrichtung lösbare Verbindungsmittel zwischen dem ersten und zweiten Abschnitt vorgesehen, die im gelösten Zustand den zweiten Abschnitt freigeben und dessen Entnahme ermöglichen.

Erfindungsgemäß ist vorgesehen, dass die Funktionseinrichtung an einer Unterseite eines Fahrzeugabschnitts angeordnet ist, wobei für eine besonders platzsparende Anordnung Bewegungsmittel vorgesehen sind, mittels derer der erste Abschnitt wechselweise von einer Funktionsstellung in eine Ruhestellung überführbar ist. Dabei dienen als Bewegungsmittel Gelenke, mit denen der erste Abschnitt schwenkbar unter der Hutablage befestigt ist. Wird nun der zweite Abschnitt entnommen, kann der erste Abschnitt um das Gelenk geschwenkt und damit in eine Ruhestellung gebracht werden. Er liegt so noch näher an der Hutablage an, und es steht mehr Stauraum im Kofferraumbereich zur Verfügung. Sind die Bewegungsmittel zudem in Richtung des zweiten Abschnitts wegverschwenkbar, kann deren unbeabsichtigte Freigabe wirksam vermieden werden.

Die erfindungsgemäßen Funktionseinrichtungen können beispielsweise die Funktionen von Einkaufskörben, Kurzreisekoffern, Kleidungsbehältern für Hemden, Hosen, Sakkos oder ähnlichem erfüllen. Aber auch andere Funktionen wie Staubehälter für Schuhe, Fahrzeugzubehör oder Reiseutensilien können im Rahmen der Erfindung umgesetzt werden.

Mit Hilfe der vorliegenden Erfindung wird es möglich in einer Vorrichtung zwei verschiedene Eigenschaften der Funktionseinrichtung zu realisieren. Zum einen ist bei aktivierten Verbindungsmitteln eine Relativbewegung des zweiten Abschnitts relativ zum fahrzeugfesten ersten Abschnitt möglich. Eine solche Bewegung kann etwa die Ausfahrbewegung eines Schubfaches darstellen, die auf diese Weise sicher geführt wird. Bei Bedarf kann nun aber auch der zweite Abschnitt durch ein besonders einfaches Lösen der Verbindungsmittel vom ersten Abschnitt getrennt und entnommen werden. So wird es möglich den zweiten Abschnitt etwa für weitere Funktionen ausserhalb des Fahrzeuges mitzuführen und einzusetzen und gleichzeitig den bislang von ihm belegten Bauraum anderweitig zu nutzen.

Besonders vorteilhaft ist es dazu, wenn die Funktionseinrichtung an einer Unterseite eines Fahrzeugabschnitts angeordnet ist. Erfindungsgemäß ist deshalb die Funktionseinrichtung an der Unterseite einer Hutablage angeordnet. Damit ist es beispielsweise möglich den zweiten an der Unterseite einer Hutablage angeordneten Abschnitt der Funktionseinrichtung zunächst in horizontaler Richtung relativ zum Fahrzeug zu bewegen. Wird dann aber der Raum unterhalb der Hutablage beispielsweise für den Transport von Koffern benötigt, können die Verbindungsmittel gelöst und der zweite Abschnitt in besonders einfacher Weise entnommen werden. Hierdurch wird der Stauraum unter Hutablagen in besonders einfacher und bedienerfreundlicher Weise für zusätzliche Funktionen nutzbar.

Für eine komfortable Bedienung und das Mitführen des zweiten Abschnitts ausserhalb des Fahrzeuges ist es vorteilhaft, wenn der zweite Abschnitt mit Handhabungsmitteln ausgestattet ist. Hierzu kommen beispielsweise Tragebügel, Riemen, Ringe, Handgriffe bzw. -schlaufen in Frage, um nur einige zu nennen. Diese sind insbesondere dann vorteilhaft, wenn sie einklappbar, versenkbar oder in sonstiger Weise zu verstauen sind, da sie so im zusammengesetzten Zustand von erstem und zweitem Abschnitt, das heisst bei aktivierten Verbindungsmitteln, nicht stören. So kann bei einem Tragekorb als zweitem Abschnitt das Handhabungsmittel ein Tragebügel sein, der sich von einer ersten Tragestellung in eine zweite Ruhestellung einklappen lässt und dadurch im zusammengesetzten Zustand nicht stört. Er ragt dabei nicht oder nur geringfügig über den zweiten Abschnitt hinaus. Neben den beschriebenen zwei Stellungen sind die Handhabungsmittel je nach Bedarf auch in beliebigen anderen Zwischenstellungen mittels Arretierungen positionierbar. Hierzu ist es besonders bedienerfreundlich, wenn diese Arretierungen als Ein-Hand-Bedienung ausgeführt sind und gleichzeitig beim Greifen der Handhabungsmittel mit einer Hand bedienbar sind.

Für eine sehr einfache Veränderung der geometrischen Form des zweiten Abschnitts sind bei einer anderen besonders bevorzugten Ausführungsform der Erfindung Einstellmittel vorgesehen. Eine Veränderung der geometrischen Form kann beispielsweise eine Verstellung der Breite oder Höhe des zweiten Abschnitts darstellen. Ist dieser als Behälter ausgebildet, so kann der Behälter mit den Einstellmitteln in seiner Höhe oder Breite an die jeweiligen Erfordernisse angepasst werden. Als Einsteilmittel können etwa Bänder oder Rastmittel dienen. Bei Bedarf können auch mehrere Einstellmittel miteinander kombiniert werden.

Für eine gute Bedienbarkeit ist es vorteilhaft, wenn die Einstell-, Handhabungs- bzw. Verbindungsmittel von einer einzigen Bedienseite aus bedienbar angeordnet sind. Dies ist bei einer Anordnung im Kofferraum unterhalb der Hutablage beispielsweise, die in Fahrtrichtung hinten liegende Seite der Funktionseinrichtung, da der Bediener bei geöffnetem Kofferraum auf diese Seite besonders leicht zugreifen kann. Insbesondere eine Zusammenlegung dieser unterschiedlichen Bedienmittel an der Bedienseite, schafft eine besonders bedienerfreundliche Funktionseinrichtung, da diese dann mit nur einer Hand bedienbar sind.

Bei bestimmten Anwendungsfällen ist es wünschenswert gleichzeitig unterschiedliche Funktionalitäten zu erzeugen. Hierzu hat es sich als besonders vorteilhaft erwiesen, wenn wenigstens ein weiterer Abschnitt mit der Funktionalität des zweiten Abschnitts vorgesehen ist. So kann beispielsweise ein zweiter Abschnitt als Ablagefach zur Aufnahme von Fahrzeuggegenständen, wie Autoatlanten, Eiskratzern etc. dienen, während ein weiterer zweiter Abschnitt etwa als Kurzreisekoffer oder Aktentasche ausgebildet ist und vom Fahrer beim Verlassen des Fahrzeuges mitgeführt wird. Die zweiten Abschnitte können dabei wahlweise nebeneinander oder übereinander angeordnet sein.

Für eine besonders leichte Bedienbarkeit ist auch vorgesehen, dass der zweite Abschnitt mittels wenigstens einer durch die Verbindungsmittel vorgegebenen Bewegungsbahn relativ zum ersten Abschnitt geführt ist. So kann der Bediener den zweiten Abschnitt entlang einer definierten Bewegungsbahn relativ zum ersten Abschnitt bewegen. Eine besonders einfach Ausführungsform einer Bewegungsbahn, stellt eine lineare Verfahrbewegung dar, etwa um den zweiten Abschnitt unter einer Hutablage herauszuziehen, so dass der Bediener leichter auf diesen zugreifen kann. Weiter entwickelte Bewegungsbahnen können aber auch alternative Bewegungen vorsehen. So kann beispielsweise der unter der Hutablage angeordnete zweite Abschnitt in einer ersten Bewegung um eine horizontal und quer zu einer Fahrtrichtung liegenden Drehachse nach unten verschwenkt werden. Hierdurch ist der zweite Abschnitt im abgeschwenkten Zustand für den Bediener leicht einsehbar. Darüber hinaus ist eine zweite Bewegungsbahn vorgesehen, entlang derer der zweite Abschnitt in horizontaler Richtung unter der Hutablage herausbewegt wird. Dies kann im abgekippten oder horizontalen Zustand erfolgen.

Ferner können motorische Antriebe zur Ausführung bzw. Unterstützung von Bewegungsvorgängen vorgesehen sein. Zur Erhöhung des Bedienkomforts ist es möglich die Bewegungsvorgänge mit Antrieben unterstützend oder selbsttätig anzutreiben. Hierzu kommen beispielsweise elektrisch oder pneumatisch angetriebene Motoren in Frage. Aber auch elektromagnetische Schalter oder Stellantriebe können, beispielsweise in Verriegelungs- oder Rastmitteln verwendet werden.

Für eine besonders sanfte Bewegung der Abschnitte ist es vorteilhaft, wenn Energiespeicher und/oder Dämpfungsmittel zur Vergleichmässigung der wenigstens einen Bewegung vorgesehen werden. Damit kann etwa die Relativbewegung der beiden Abschnitte zueinander, ähnlich einer gedämpften Küchenschublade, besonders sanft erfolgen. Zudem kann auch ein automatischer Einzug des zweiten Abschnitts relativ zum ersten Abschnitt auf diese Weise erreicht werden, so dass ein kurzes Antippen des zweiten Abschnitts bereits genügt, um diesen in seine Grundstellung zurückzufahren. Hierbei ist unter Grundstellung die Stellung zu verstehen, welche der zweite Abschnitt in der Ruhestellung unter der Hutablage relativ zum ersten Abschnitt einnimmt.

Schliesslich ist noch bei einer ganz besonders vorteilhaften Ausführungsform der Erfindung vorgesehen, dass die Handhabungsmittel gleichzeitig als Bestandteil der Verbindungsmittel ausgebildet sind. So kann beispielsweise ein als Handhabungsmittel dienender Tragebügel gleichzeitig als Bestandteil der Verbindungsmittel ausgebildet sein. Hierzu ist der Tragebügel im eingeklappten Zustand in einer horizontalen Lage angeordnet, so dass der zweite Abschnitt im ersten Abschnitt geführt werden kann. Sieht man nun vor, dass sich der Tragebügel in dieser Stellung in horizontaler Richtung relativ zum zweiten Abschnitt bewegen lässt, kann diese Relativbewegung zum Lösen des Verbindungsmittels zwischen dem ersten und zweiten Abschnitt ausgenutzt werden. Neben der beschriebenen Relativbewegung des Tragbügels relativ zum zweiten Abschnitt ist es auch möglich andere bekannte und geeignete Betätigungs- bzw. Auslösemechanismen zur Betätigung der Verbindungsmittel zwischen den Abschnitten zu verwenden. So kann beispielsweise im Tragbügel ein Drehgriff, ähnlich einem Gashebel eines Motorrades oder eine Taste, zum Lösen bzw. Verriegeln der Verbindungsmittel dienen.

Weitere Vorteile der Erfindung sind im Zusammenhang mit den nachfolgenden Ausführungsbeispielen und der Zeichnung beschrieben. Es zeigt darin:
Fig. 1 eine Schrägansicht auf einen offenen Kofferraum mit einer ersten Ausführungsform einer erfindungsgemässen Funktionseinrichtung;
Fig. 2 eine Schrägansicht auf einen offenen Kofferraum mit einer zweiten Ausführungsform einer erfindungsgemässen Funktionseinrichtung;
Fig. 3 eine Schrägansicht der ersten Ausführungsform geöffnet und eingefahren;
Fig. 4 eine Schrägansicht der ersten Ausführungsform geöffnet und teilweise ausgefahren;
Fig. 5 eine Schrägansicht der ersten Ausführungsform geöffnet vollständig ausgefahren;
Fig. 6 eine Schrägansicht der Struktur der ersten Ausführungsform geöffnet und eingefahren;
Fig. 7 eine Schrägansicht der Struktur der ersten Ausführungsform geschlossen und eingefahren;
Fig. 8 eine Schrägansicht der Struktur der zweiten Ausführungsform geöffnet und eingefahren;
Fig. 9 eine Schrägansicht der Struktur der zweiten Ausführungsform geöffnet und ausgefahren;
Fig. 10 eine Schrägansicht der zweiten Ausführungsform geöffnet und ausgefahren;
Fig. 11 eine Schrägansicht der Struktur der zweiten Ausführungsform in Totpunktlage und eingefahren;
Fig. 12 eine Schrägansicht der zweiten Ausführungsform geschlossen und eingefahren;
Fig. 13 eine Vorderansicht einer Bedienseite;
Fig. 14 eine Draufsicht auf die Funktionseinrichtung nach Figur 13;
Fig. 15 eine Seitenansicht einer Ausführungsform mit Einstellmitteln; und
Fig. 16 eine Vorderansicht einer Ausführungsform mit schwenkbarem ersten Abschnitt.

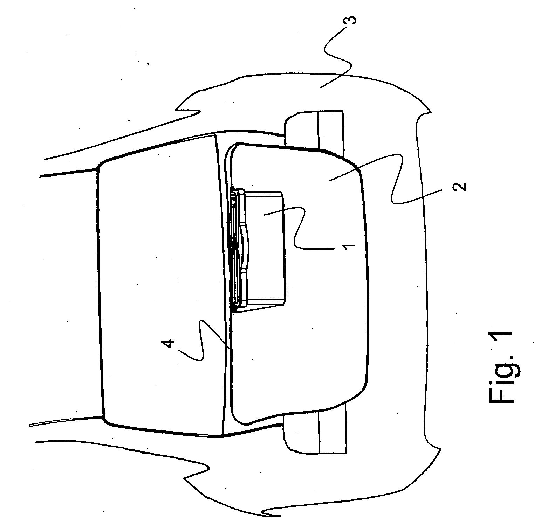

In Figur 1 ist eine erfindungsgemässe Funktionseinrichtung 1 in einem Kofferraum 2 eines Fahrzeuges 3 dargestellt. Die Funktionseinrichtung 1 ist dabei an einer Unterseite einer Hutablage 4 hängend angeordnet. Auf diese Weise bleibt der Boden des Kofferraums 2 auch weiterhin, beispielsweise für sehr schwere Gegenstände, nutzbar. Bei geöffnetem Kofferraum 2 kann ein Bediener von der Rückseite des Fahrzeugs aus auf die Funktionseinrichtung 1 zugreifen. Die Funktionseinrichtung 1 ist in einem geöffneten Zustand dargestellt. Dies bedeutet die Funktionseinrichtung 1 ist von der Hutablage 4 ausgehend nach unten hin ausgefahren.

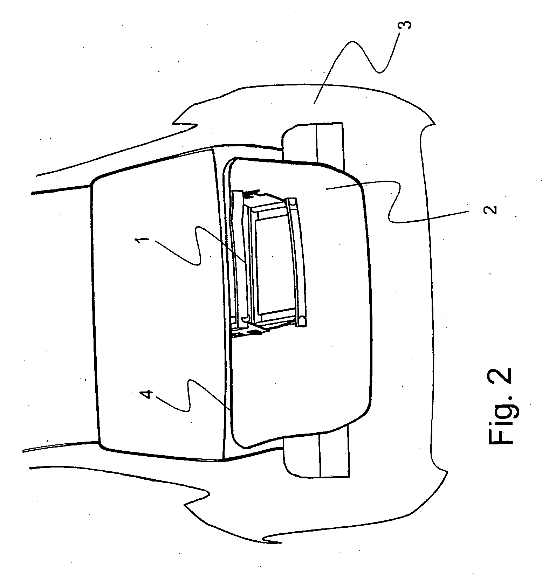

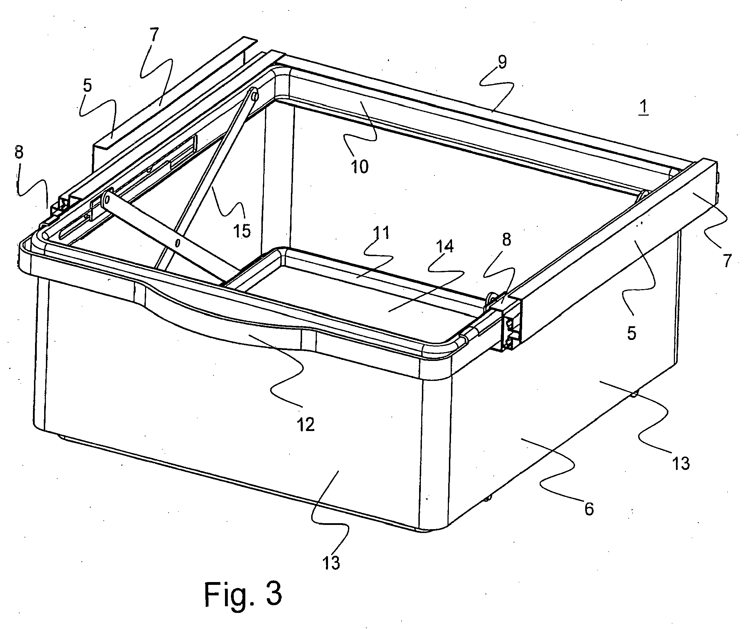

In Figur 2 ist eine zweite Ausführungsform einer erfindungsgemässen Funktionseinrichtung ebenfalls in einem geöffneten Zustand dargestellt. Hierbei ist lediglich eine Struktur der Funktionseinrichtung 1 dargestellt. Weitere Einzelheiten dieser und der ersten Ausführungsform werden im Zusammenhang mit den nachfolgenden Figuren noch näher erläutert. In Figur 3 ist nun die Funktionseinrichtung 1 nach Figur 1 in einer Schrägansicht ohne das zugehörige Fahrzeug 3 dargestellt. Sie besteht aus einem fahrzeugfest montierten ersten Abschnitt 5 und einem dazu relativ verfahrbaren bzw. herausnehmbaren zweiten Abschnitt 6. Der erste Abschnitt 5 besteht aus zwei fahrzeugfest montierten Aussenschienen 7 und darin teleskopartig geführten Innenschienen 8. Die beiden Aussenschienen 7 sind durch einen Querträger 9 miteinander verbunden und bilden so einen offenen Rahmen zur Aufnahme des zweiten Abschnitts 6. Die Innenschienen 8 weisen auf der dem zweiten Abschnitt 6 zugewandten Seite einen U-förmige Querschnitt auf. In dem U-förmigen Querschnitt der Innenschienen 8 ist ein oberer Rahmen 10 des zweiten Abschnitts 6 eingesetzt. Der obere Rahmen 10 besteht aus vier Seiten und ist geschlossen. Neben dem oberen Rahmen 10 weist der zweite Abschnitt 6 noch einen unteren Rahmen 11 auf, der ebenfalls von vier Seiten gebildet wird und geschlossen ist. Am oberen Rahmen 10 ist als Handhabungsmittel ein Tragebügel 12 angeordnet. Der Tragebügel 12 ist in einer eingeklappten Stellung dargestellt, wodurch sich der zweite Abschnitt 6 in die U-förmig gestalteten Innenschienen 8 einschieben lässt. Weiterhin weist der zweite Abschnitt 6 vier Seitenwände 13 auf, die von einer Stoffbespannung gebildet werden. Die Unterseite des zweiten Abschnitts 6 bildet ein starrer Boden 14, der beispielsweise als Holzboden ausgebildet sein kann. Um den Boden 14 zusammen mit dem unteren Rahmen 11 in kontrollierter Weise in der Höhe zu verfahren, sind zwei Kreuzgelenkverbindungen 15 vorgesehen, welche den oberen Rahmen 10 und den unteren Rahmen 11 miteinander koppeln. Hierdurch ist gewährleistet, dass sich der Boden 14 nur in vertikaler Richtung relativ zum oberen Rahmen 10 verfahren lässt.

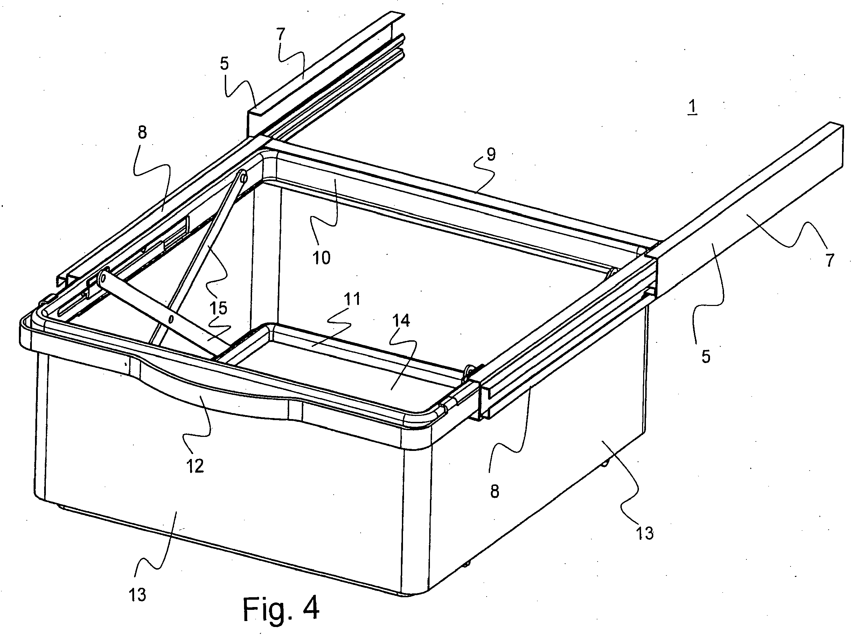

Die im Kofferraum 2 angeordnete und so ausgebildete Funktionseinrichtung 1 kann als Staufach genutzt werden. Zum Be- bzw. Entladen zieht der Bediener den zweiten Abschnitt 6 mit Hilfe der teleskopartigen Innenschiene 8 zu sich heran und kann so leicht auf den Inhalt zugreifen. Nach dem Zugriff wird der zweite Abschnitt 6 wieder in den Bereich unterhalb der Hutablage 4 in eine Ruhestellung zurückgeschoben. In Figur 4 ist nun die Funktionseinrichtung 1 nach Figur 3 in einem teilweise ausgefahrenen Zustand dargestellt. Der zweite Abschnitt 6 ist wiederum nach unten geöffnet und bildet einen Stauraum bzw. ein Ablagefach. In dem teilweise ausgefahrenen Zustand kann der Bediener nun besonders einfach auf den Inhalt des zweiten Abschnitts 6 zugreifen, da dieser unter der Hutablage 4 herausragt und sich näher am hinteren Ende des Fahrzeuges 3 befindet. Nach dem Befüllen bzw. Entladen des zweiten Abschnitts 6 schiebt der Bediener diesen dann in horizontaler Richtung entlang der Aussenschiene 7 zurück unter die Hutablage 4. Um ein unbeabsichtigtes Herausbewegen des zweiten Abschnitts 6 aus dieser Ruhestellung zu vermeiden, was beispielsweise bei einem Anfahrvorgang der Fall wäre, sind zwischen der Aussenschiene 7 und der Innenschiene 8 Verriegelungsmechanismen anzuordnen. Eine mögliche Ausgestaltung eines solchen Verriegelungsmechanismus kann eine Doppelverrastung sein. Doppelverrastungen finden etwa bei Kugelschreibern Anwendung. Dabei wird bei einer ersten Druckbetätigung eine Bewegung einer Schreibmine freigegeben, während sie bei einer erneuten Druckbewegung verriegelt wird. Mit diesem Prinzip wäre es bei der erfindungsgemässen Funktionseinrichtung 1 möglich, die Innenschiene 8 bei einem ersten Eindrücken relativ zur Aussenschiene 7 zu verriegeln, so dass die Innenschiene 8 nicht mehr herausgezogen werden kann. Wird die Innenschiene 8 dann erneut nach vorne in die Aussenschiene 7 hineingedrückt, beispielsweise in Fahrtrichtung, so wird deren Bewegung nach hinten freigegeben und der zweite Abschnitt 6 kann zusammen mit der Innenschiene 8 bis zu einem Anschlag herausgezogen werden. Hierbei ist es sinnvoll eine weitere Verriegelung zwischen dem zweiten Abschnitt 6 und der Innenschiene 8 vorzusehen. Mittels einer solchen Verriegelung ist es dann möglich, den zweiten Abschnitt 6 fest an der Innenschiene 8 anzubinden und somit ein unbeabsichtigtes Herausziehen des zweiten Abschnitts 6 aus der Führung der Innenschiene 8 zu verhindern. Erst wenn der Bediener den zweiten Abschnitt 6 aus dem Fahrzeug 3 entnehmen möchte, muss er diese Verriegelung bewusst lösen. Besonders komfortabel ist es hierbei, eine Betätigung der Verriegelung im Zusammenhang mit dem Tragbügel 12 vorzusehen. So kann beispielsweise am Tragbügel 12 ein nicht dargestellter Druckknopf angeordnet sein, der bei Betätigung den Verriegelungsmechanismus zwischen dem zweiten Abschnitt 6 und der Innenschiene 8 löst, so dass der zweite Abschnitt 6 herausnehmbar ist. Neben einem Druckknopf können aber auch sämtliche andere geeignete Betätigungsmittel für die beschriebene Verriegelungseinrichtung vorgesehen sein, wie beispielsweise ein Drehgriff am Tragbügel 12 oder eine Lageänderung des Tragbügels 12 relativ zum zweiten Abschnitt 6. Bei einer derartigen Ausführung, welche eine Lageänderung des abgeklappten Tragbügels 12 zum Lösen der Verriegelungseinrichtung vorsieht, ist es dann möglich mit einer Ein-Hand-Bedienung den Tragbügel 12 in dem in Figur 4 dargestellten abgeklappten Zustand zu fassen und beispielsweise aus einer Ruhestellung heraus mit dem oberen Rahmen 10 zusammenzudrücken, so dass dieser sich leicht in Fahrtrichtung nach vorne bewegt. Diese Bewegung kann dazu genutzt werden, um die Verriegelungseinrichtung zwischen dem zweiten Abschnitt 6 und der Innenschiene 8 zu lösen. Insbesondere eine Kombination der Schienen 7,8 mit den beschriebenen Verriegelungseinrichtungen zwischen dem ersten Abschnitt 5 und dem zweiten Abschnitt 6 bzw. zwischen der Aussenschiene 7 und der Innenschiene 8 zu einem Verbindungsmittel, ermöglichen einen stets sicheren und definierten Zustand des zweiten Abschnitts 6 bei gleichzeitig hohem Bedienkomfort.

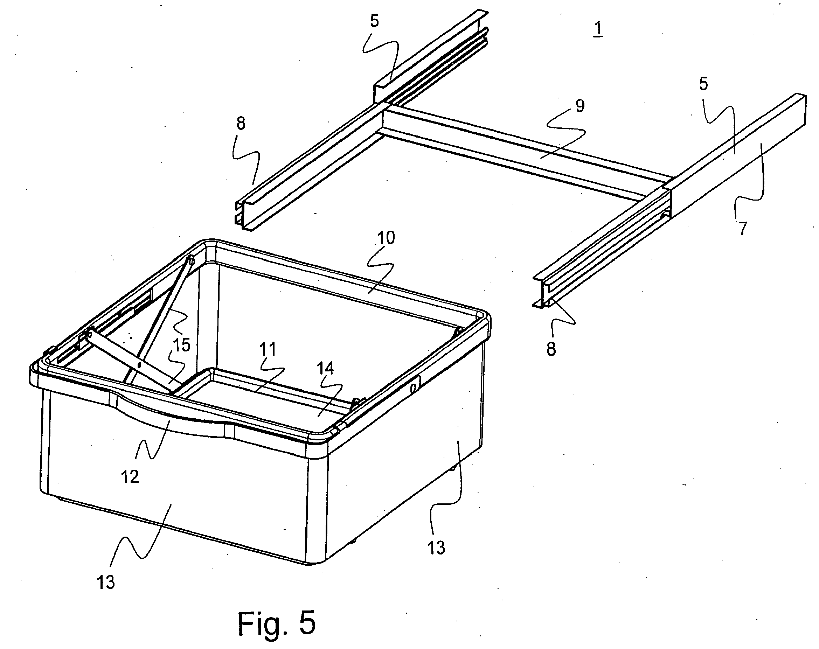

In Figur 5 ist die Funktionseinrichtung 1 nach Figur 3 wieder in einem geöffneten Zustand dargestellt. Hierbei ist der zweite Abschnitt 6 vollständig aus dem ersten Abschnitt 5 heraus bewegt, und die Innenschiene 8 relativ zur Aussenschiene 7 nach hinten verfahren. In diesem Zustand muss der Tragbügel 12 lediglich nach oben bewegt werden und der zweite Abschnitt 5 kann beispielsweise als Einkaufskorb verwendet werden. Vorteilhafterweise ist eine weitere Verriegelungseinrichtung vorgesehen, welche den Tragbügel 12 in diesem aufgestellten Zustand hält, solange er als Tragebehälter dient.

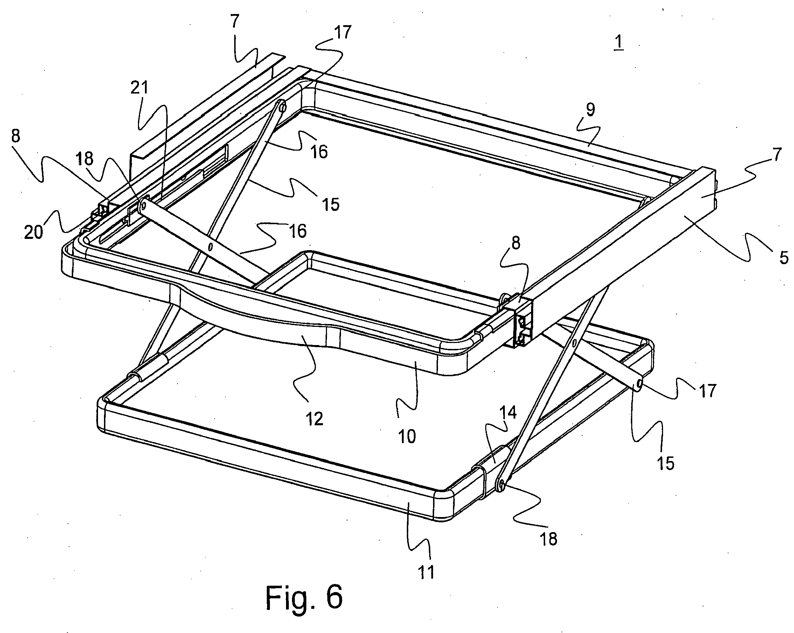

In Figur 6 ist nun die Struktur der erfindungsgemässen Funktionseinrichtung ohne Seitenwände dargestellt. Gut erkennbar sind hierbei die Kreuzgelenkverbindungen 15, von denen jeweils eine rechts- und linksseitig angeordnet ist. Die Kreuzgelenkverbindung 15 besteht aus jeweils zwei Stäben 16, die über feststehende Drehpunkte 17 mit dem oberen Rahmen 10 bzw. dem unteren Rahmen 11 verbunden sind. Die gegenüberliegenden Enden der Stäbe 16 sind über verschiebbare Drehpunkte 18 mit dem jeweils gegenüberliegenden Rahmen 10 bzw. 11 verbunden. Am unteren Rahmen 11 ist der verschiebbare Drehpunkt 18 mittels eines Gleitstücks 19 beweglich ausgeführt. Das Gleitstück 19 umschliesst den unteren Rahmen11 und kann auf dessen Aussenumfang entlang gleiten kann. Der obere verschiebbare Drehpunkt 18 ist an einem Kulissenstein 20 angeordnet, der in einer Kulisse 21 gleitend geführt ist. Mit der so gebildeten Kinematik ist gewährleistet, dass sich der untere Rahmen 11 relativ zum oberen Rahmen 12 nur in vertikaler Richtung bewegen lässt. Andere Relativbewegungen sind damit ausgeschlossen.

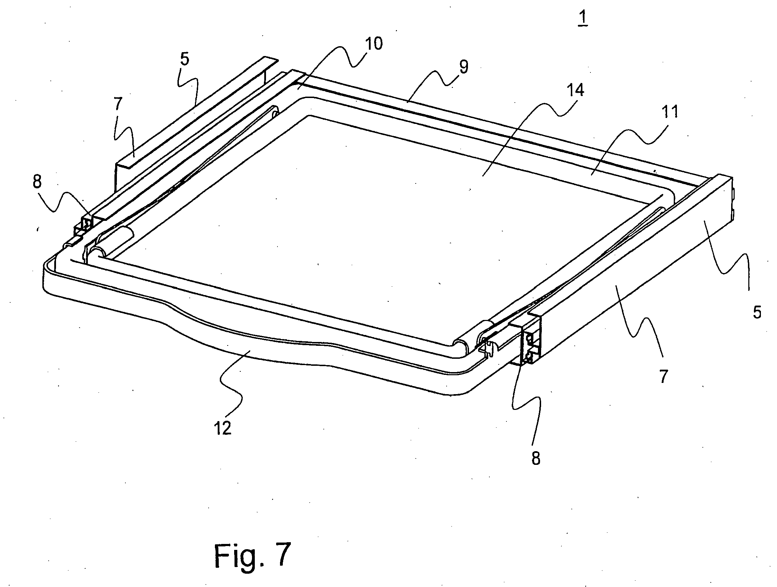

In Figur 7 ist nun die Struktur der Funktionseinrichtung 1 nach Figur 3 nochmals in einem geschlossenen Zustand dargestellt. Deutlich zu sehen ist die geringe Bauhöhe, die die Funktionseinrichtung 1 im geschlossenen Zustand benötigt. Hierdurch wird der Laderaum unterhalb der Hutablage nur unwesentlich beeinträchtigt und kann, beispielsweise zum Einladen von Koffern nahezu vollständig genutzt werden.

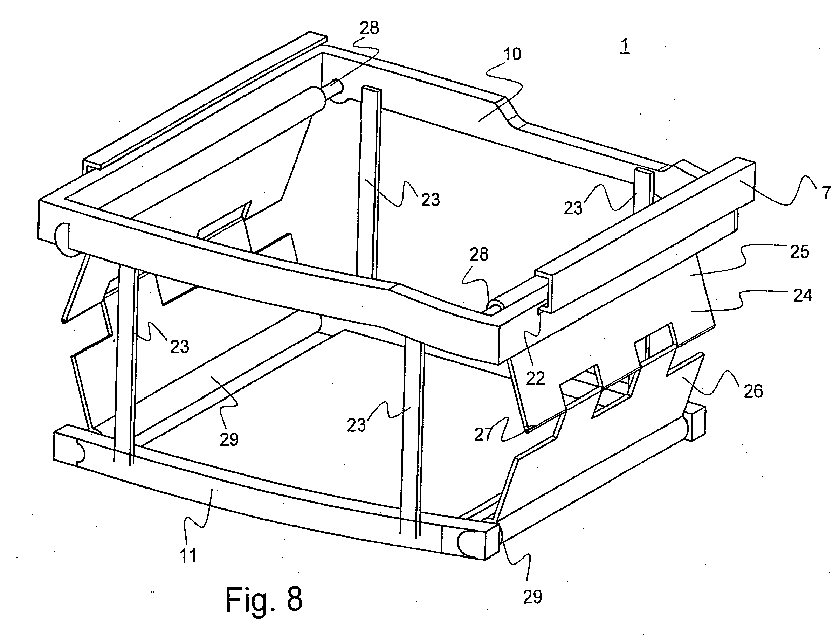

Die Figur 8 stellt die Struktur einer weiteren Ausführungsform der Erfindung dar. Auch diese Ausführungsform weist einen oberen Rahmen 10 und einen unteren Rahmen 11 auf. Der obere Rahmen 10 ist in einer Aussenschiene 7 geführt, welche fest mit dem Fahrzeug 3 verbunden ist. Die mechanische Führung ist durch eine im oberen Rahmen 10 eingearbeitete Nut 22 gewährleistet. Zwischen dem oberen Rahmen 10 und dem unteren Rahmen 11 sind vier elastische Elemente 23 angeordnet, welche eine Kraft ausüben um beide Rahmen 10,11 zueinander zu bewegen. Die elastischen Elemente 23 können beispielsweise übliche gummielastische Elemente oder auch Federelemente sein. Hierzu sind zahlreiche geeignete Bauteile einsetzbar, welche ein elastisches Verhalten aufweisen und dazu geeignet sind eine Kraft auszuüben, um die beiden Rahmen 10 und 11 zueinander zu bewegen. Im Weiteren sind bei dieser Ausführungsform drehbewegliche zweigeteilte Seitenteile 24 vorgesehen. Die Seitenteile 24 bestehen aus einem Oberteil 25 und einem Unterteil 26, die über eine Drehachse 27 miteinander verbunden sind. Die Anbindung des Oberteils 25 an den oberen Rahmen 10 erfolgt über eine weitere Drehachse 28, wohingegen die Anbindung des Unterteils 26 an den unteren Rahmen 11 über eine Drehachse 29 erfolgt. Diese Ausführungsform der Erfindung funktioniert zusammen mit einer später noch näher erläuterten Umfassung des zweiten Abschnitts 6.

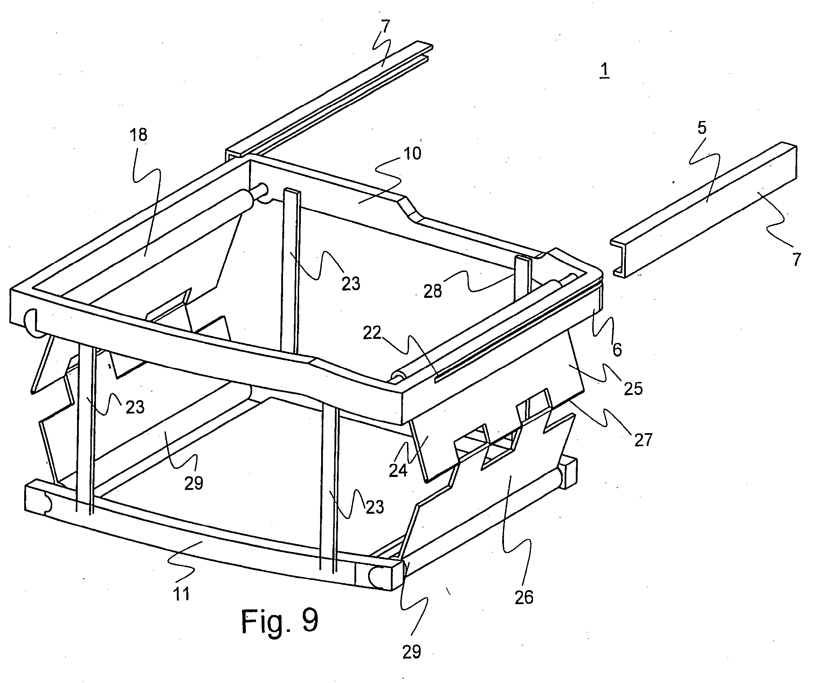

In Figur 9 ist nun zunächst die Funktionseinrichtung 1 in einem vollständig ausgefahrenen Zustand dargestellt, in dem diese aus dem Fahrzeug 3 entnommen und vom Bediener mitgeführt werden kann. Auch hierbei ist eine Verriegelung zwischen dem ersten Abschnitt 5 und dem zweiten Abschnitt 6 mittels einer Doppelverrastung möglich, wie sie bereits zuvor erläutert worden ist. Es können aber auch andere geeignete Verriegelungsmittel an dieser Stelle zum Einsatz kommen, insbesondere solche die an einer besonders einfach erreichbaren Bedienseite angeordnet sind und von einem Bediener vom Fahrzeugheck aus besonders leicht zu bedienen sind. Vorzugsweise werden dabei sämtliche Bedieneinrichtungen an einer Bedienseite zusammengefasst, so dass alle Funktionen der Funktionseinrichtung mit einer Hand bedienbar sind.

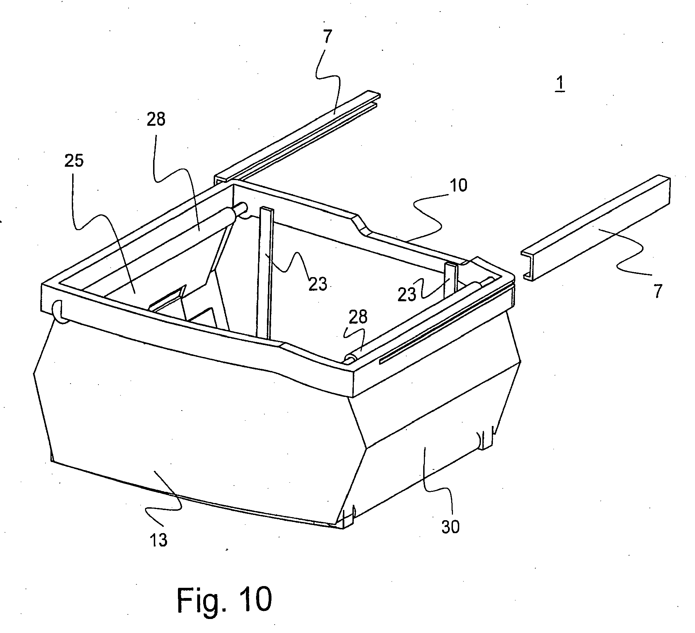

In Figur 10 ist nun die Funktionseinrichtung 1 nach Figur 8 in einem geöffneten und vollständig ausgefahrenen Zustand dargestellt, wobei die zuvor dargestellte Struktur von einer Seitenwand in Form einer Stoffumspannung 13 umgeben ist. Die Stoffumspannung 13 begrenzt die Umfangslänge des zweiten Abschnitts 6. Hierdurch wird die Bewegung der Seitenteile 24 und insbesondere die Drehachsen 27 nach aussen hin begrenzt. Die von den gummielastischen Elementen 23 initiierte Bewegung der Drehachse 27 nach aussen erfährt somit einen Anschlag und der so geöffnete zweite Abschnitt 6 befindet sich in einem stabilen Zustand.

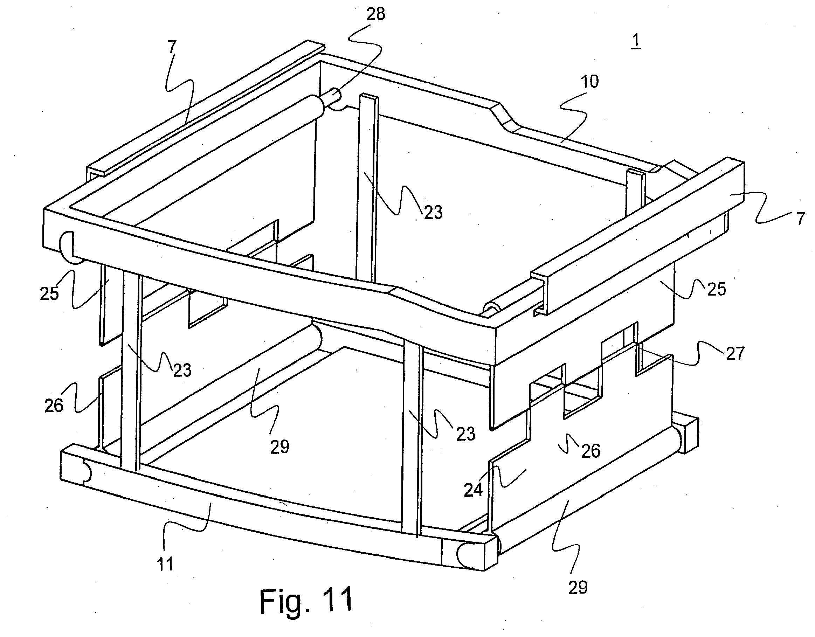

Möchte nun ein Bediener den zweiten Abschnitt 6 schliessen, so drückt er, wie in Figur 11 dargestellt, die Seitenteile 24 lediglich nach innen hin, wodurch die gummielastischen Elemente 23 so lange gestreckt werden, bis das Oberteil 25 und das Unterteil 26 in einer Ebene liegen. Wird die Drehachse 27 dann weiter nach innen hin bewegt, so wird dieser indifferente Zustand der Überdrückung überwunden, und die Funktionseinrichtung 1 bzw. der zweite Abschnitt 6 faltet sich selbsttätig zusammen.

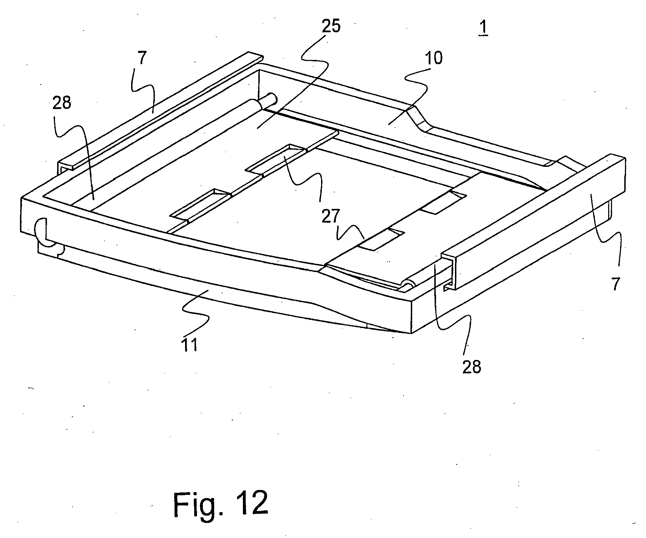

In Figur 12 ist dieser vollständig geschlossene Zustand nochmals in einer Schrägansicht der Struktur der Funktionseinrichtung 1 dargestellt.

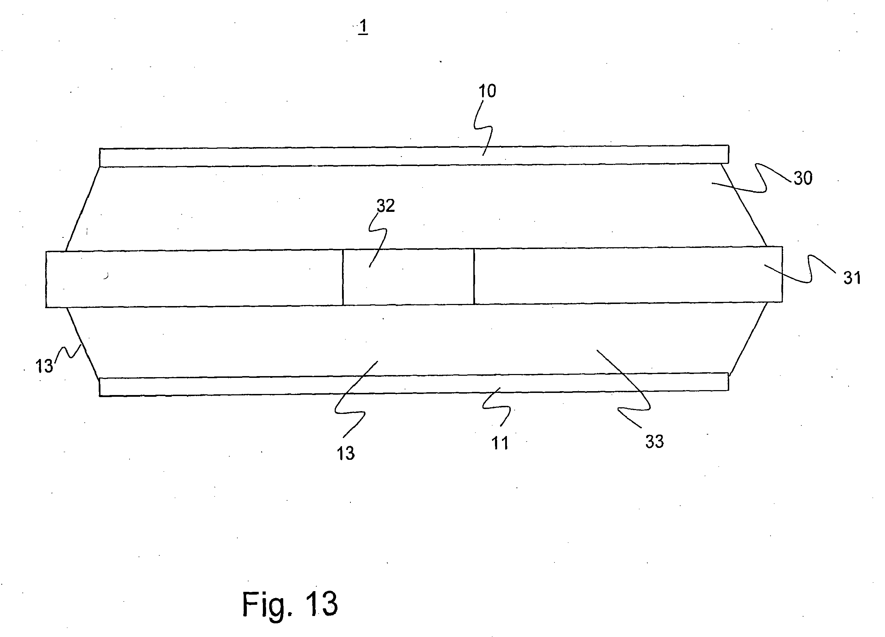

Figur 13 zeigt nun eine Vorderansicht der zuvor beschriebenen Funktionseinrichtung 1 nach Figur 10. Gut erkennbar ist wiederum der obere Rahmen 10 sowie der untere Rahmen 11. Zwischen beiden Rahmen 10,11 ist eine Stoffumspannung 30 angeordnet, welche gleichzeitig die Seitenwände 13 bildet. Zusätzlich weist diese Ausführungsform noch ein umlaufendes Band 31 auf, welches etwa in Höhe der Drehachsen 27 der Seitenteile 24 angeordnet ist. Mittels des Bands 31 kann die Funktionseinrichtung 1 bequem von einer Bedienseite 33 aus geschlossen werden. Hierzu weist das Band 31 eine Schlaufe 32 auf, die an der Bedienseite 33 angeordnet ist. Bei der Anordnung im Kofferraum eines Pkws wird die Bedienseite 33 in der Regel die zur Fahrzeugrückseite zeigende Seite der Funktionseinrichtung 1 sein, da ein Bediener, welcher hinter dem Fahrzeug steht, auf diese Bedienseite 33 besonders einfach zugreifen kann. Insgesamt ist es sinnvoll, sämtliche Mittel von dieser Bedienseite aus betätigbar zu gestalten.

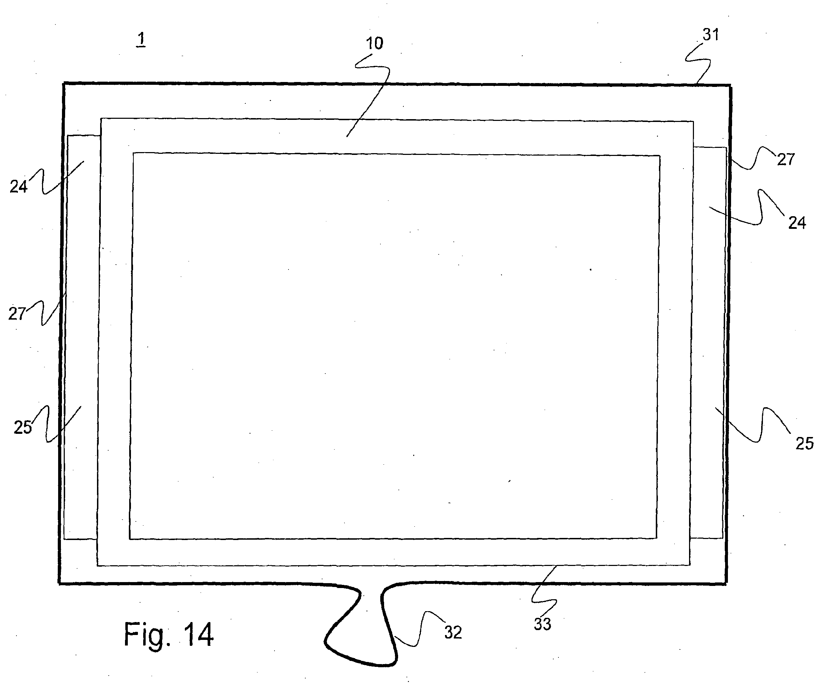

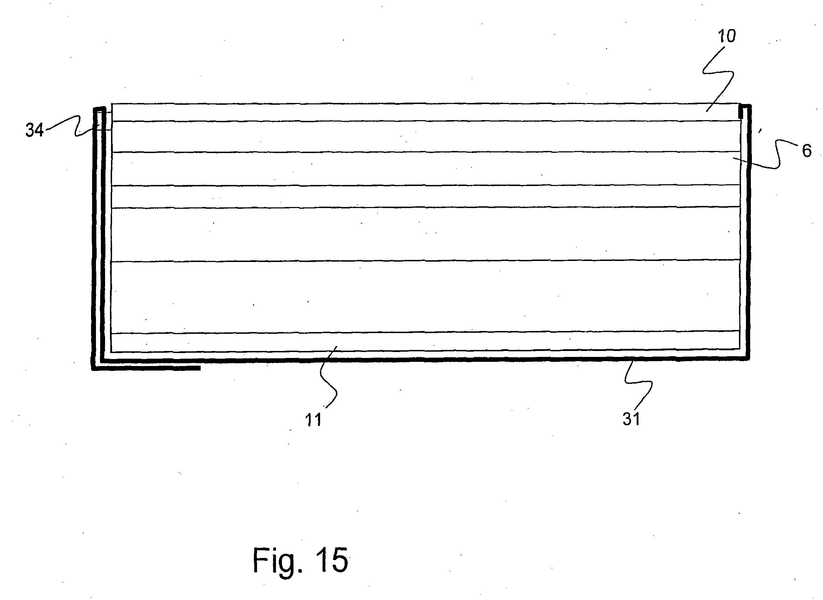

In Figur 14 ist nun die Funktionseinrichtung 1 nach Figur 13 nochmals in einer Draufsicht dargestellt. Gut erkennbar ist hierbei wiederum die an der Bedienseite 33 angeordnete Schlaufe 32 des umlaufenden Bandes 31. Zieht nun ein Bediener an der Schlaufe 32, so verkürzt er die Gesamtlänge des Bandes 31 und drückt die Achsen 27 der Seitenteile 24 nach innen hin, wodurch der zuvor beschriebene Schliessvorgang ausgelöst wird.In Figur 15 ist ein zweiter Abschnitt 6 einer Funktionseinrichtung 1 in einer Seitenansicht dargestellt. Der zweite Abschnitt 6 weist ein Einstellmittel zur Veränderung seiner geometrischen Form in Form eines Bandes 31 auf. Bei dieser Ausführungsform ist das Band 31 an der rechten oberen Seite fest mit dem oberen Rahmen 10 verbunden. Es ist im weiteren entlang der Unterseite des zweiten Abschnitts 6, zu dessen in Fahrtrichtung hinten liegender Seite geführt. Dort wird das Band 31 um einen am oberen Rahmen 10 befestigten Bügel 34 umgelenkt und wieder zurück nach vorne geführt. Verbindet man die übereinander geführten Abschnitte des Bandes 31 , etwa mittels eines Klettverschlusses, kann auf diese Weise durch Ziehen bzw. Lösen des Bandes 31 die Höhe des zweiten Abschnitts 6 eingestellt werden. Dies ist ein besonders einfach gestaltetes Einstellmittel zur Veränderung der Bauhöhe des zweiten Abschnitts 6, wodurch sich dieser in seiner geometrischen Form an die jeweiligen Bedürfnisse anpassen lässt.

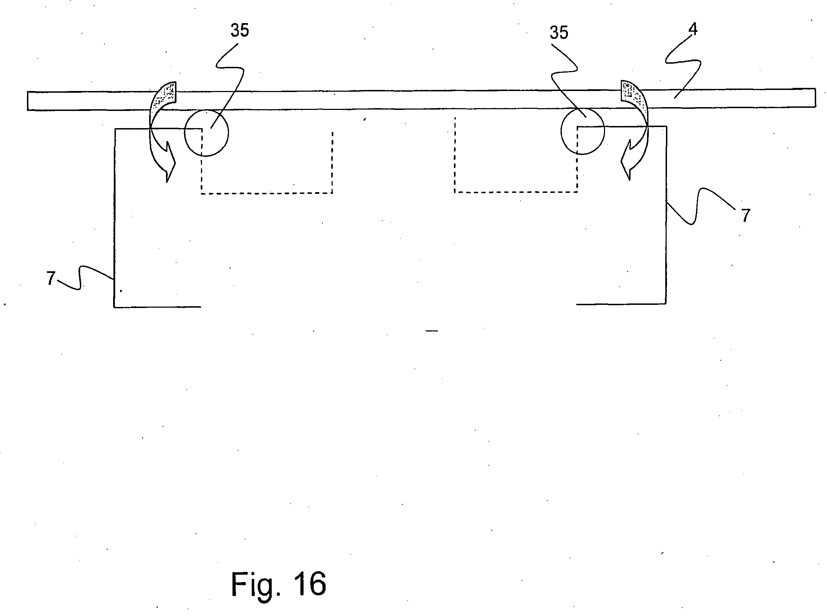

In Figur 16 ist schliesslich eine Ausführungsförm dargestellt, bei der an der Unterseite einer Hutablage 4 die Aussenschienen 7 um Drehachsen 35 schwenkbar angeordnet sind. Die Aussenschienen 7 lassen sich jeweils in Richtung der Pfeile nach innen hin verschwenken, bis sie an der Hutablage 4 anliegen. Diese Ausführungsform bietet den grossen Vorteil, dass bei entnommenen zweiten Abschnitt 6 der erste Abschnitt 5 platzsparend in Richtung der Hutablage 4 eingeklappt werden kann. Hierdurch wird der für den ersten Abschnitt 5 unterhalb der Hutablage 4 benötigte Bauraum auf ein Minimum reduziert.

### Bezugszeichenliste

- I: Funktionseinrichtung
- 2.: Kofferraum
- 3.: Fahrzeug
- 4.: Hutablage
- 5.: erster Abschnitt
- 6.: zweiter Abschnitt
- 7.: Aussenschiene
- 8.: Innenschiene
- 9.: Querträger
- 10.: oberer Rahmen
- 11.: unterer Rahmen
- 12.: Tragbügel
- 13.: Seitenwand
- 14.: Boden
- 15.: Kreuzgelenk
- 16.: Stab
- 17.: fester Drehpunkt
- 18.: verschiebbarer Drehpunkt
- 19.: Gleitstück
- 20.: Kulissenstein
- 21.: Kulisse
- 22.: Nut
- 23.: elastisches Element
- 24.: Seitenteil
- 25.: Oberteil
- 26.: Unterteil
- 27.: Drehachse
- 28.: Drehachse
- 29.: Drehachse
- 30.: Stoffumspannung
- 31.: Band
- 32.: Schlaufe
- 33.: Bedienseite
- 34.: Bügel
- 35.: Drehachse

## Patentansprüche

1. Fahrzeug (3) mit einer als Staufacheinrichtung ausgebildeten Funktionseinrichtung (1), die wenigstens zwei Abschnitte (5, 6) aufweist, wobei relativ zum Fahrzeug (3) ein erster Abschnitt (5) unbeweglich und ein zweiter Abschnitt (6) beweglich angeordnet ist, und bei der ferner lösbare Verbindungsmittel zwischen dem ersten und zweiten Abschnitt (5, 6) vorgesehen sind, die im gelösten Zustand den zweiten Abschnitt (6) freigeben und dessen Entnahme ermöglichen, wobei die Funktionseinrichtung (1) an einer Unterseite eines als Hutablage ausgebildeten Fahrzeugabschnitts (4) angeordnet ist, und **dadurch gekennzeichnet, dass** Bewegungsmittel vorgesehen sind, mittels denen der erste Abschnitt (5) wechselweise von einer Funktionsstellung in eine Ruhestellung überführbar ist, wobei als Bewegungsmittel Gelenke dienen, mit denen der erste Abschnitt (5) schwenkbar unter der Hutablage (4) befestigt ist, so dass der erste Abschnitt (5) bei entnommenen zweiten Abschnitt (6) um das Gelenk schwenkbar und damit in die Ruhestellung bringbar ist.

2. Fahrzeug (3) nach Anspruch 1, **dadurch gekennzeichnet, dass** der zweite Abschnitt (6) mit Handhabungsmitteln (12) ausgestattet ist.

3. Fahrzeug (3) nach Anspruch 1 oder 2, **dadurch gekennzeichnet, dass** der zweite Abschnitt (6) Einstellmittel (31, 32) zur Veränderung seiner geometrischen Form aufweist.

4. Fahrzeug (3) nach einem der vorhergehenden Ansprüche, **dadurch gekennzeichnet, dass** die Einstell- (31, 32) und Verbindungsmittel (7, 8) von einer Bedienseite (33) aus bedienbar angeordnet sind.

5. Fahrzeug (3) nach einem der vorhergehenden Ansprüche, **dadurch gekennzeichnet, dass** wenigstens ein weiterer Abschnitt (6) mit der Funktionalität des zweiten Abschnitts (6) vorgesehen ist.

6. Fahrzeug (3) nach einem der vorhergehenden Ansprüche, **dadurch gekennzeichnet, dass** der zweite Abschnitt (6) mittels wenigstens einer durch die Verbindungsmittel (7, 8) vorgegebenen Bewegungsbahn relativ zum ersten Abschnitt (5) geführt ist.

7. Fahrzeug (3) nach einem der vorhergehenden Ansprüche, **dadurch gekennzeichnet, dass** motorische Antriebe zur Ausführung bzw. Unterstützung von Bewegungsvorgängen vorgesehen sind.

8. Fahrzeug (3) nach einem der vorhergehenden Ansprüche, **dadurch gekennzeichnet, dass** Energiespeicher und/oder Dämpfungsmittel zur Vergleichmäßigung der wenigstens einen Bewegung vorgesehen sind.

## Claims

1. Vehicle (3) having a functional device (1) formed as a storage compartment device which has at least two sections (5, 6), wherein a first section (5) is arranged immovably and a second section (6) is arranged moveably relative to the vehicle (3), and in which furthermore releasable connection means are provided between the first and second section (5, 6) which release the second section (6) in the released state and enable the extraction thereof, wherein the functional device (1) is arranged on an underside of a vehicle section (4) formed as a parcel shelf, and **characterised in that** movement means are provided, by means of which the first section (5) is able to be transferred alternately from a functional position into a rest position, wherein joints serve as movement means with which the first section (5) is fastened under the parcel shelf (4) to be pivotable, such that the first section (5) is pivotable around the joint in the case of an extracted second section (6) and therefore is able to be brought into the rest position.

2. Vehicle (3) according to Claim 1, **characterised in that** the second section (6) is equipped with handling means (12).

3. Vehicle (3) according to Claim 1 or 2, **characterised in that** the second section (6) has adjustment means (31, 32) for changing its geometric shape.

4. Vehicle (3) according to any one of the preceding claims, **characterised in that** the adjustment (31, 32) and connection means (7, 8) are arranged to be operable from an operating side (33).

5. Vehicle (3) according to any one of the preceding claims, **characterised in that** at least one further section (6) is provided with the functionality of the second section (6).

6. Vehicle (3) according to any one of the preceding claims, **characterised in that** the second section (6) is guided relative to the first section (5) by means of at least one movement path provided through the connection means (7, 8).

7. Vehicle (3) according to any one of the preceding claims, **characterised in that** motor drives are provided for executing or supporting movement procedures.

8. Vehicle (3) according to any one of the preceding claims, **characterised in that** energy stores and/or attenuation means are provided for homogenising the at least one movement.

## Revendications

1. Véhicule (3) comprenant un système fonctionnel (1) réalisé sous la forme d'un système à compartiment de rangement, lequel présente au moins deux sections (5, 6), dans lequel une première section (5) est disposée de manière immobile et une deuxième section (6) est disposée de manière mobile par rapport au véhicule (3), et dans lequel des moyens de liaison amovibles sont en outre prévus entre la première et la deuxième section (5, 6), lesquels libèrent, dans l'état détaché, la deuxième section (6) et en permettent son retrait, dans lequel le système fonctionnel (1) est disposé au niveau d'un côté inférieur d'une section de véhicule (4) réalisée sous la forme d'une plage arrière, **caractérisé en ce que** sont prévus des moyens de déplacement, au moyen desquels la première section (5) peut être amenée en alternance d'une position fonctionnelle dans une position de repos, dans lequel des articulations font office de moyens de déplacement, avec lesquelles la première section (5) est fixée de manière à pouvoir pivoter sous la plage arrière (4) de sorte que la première section (5) peut être pivotée autour de l'articulation en présence d'une deuxième section (6) retirée et peut ainsi être amenée dans la position de repos.

2. Véhicule (3) selon la revendication 1, **caractérisé en ce que** la deuxième section (6) est équipée de moyens de manipulation (12).

3. Véhicule (3) selon la revendication 1 ou 2, **caractérisé en ce que** la deuxième section (6) présente des moyens de réglage (31, 32) pour modifier sa forme géométrique.

4. Véhicule (3) selon l'une quelconque des revendications précédentes, **caractérisé en ce que** les moyens de réglage (31, 32) et de liaison (7, 8) sont disposés de manière à pouvoir être commandés depuis un côté de commande (33).

5. Véhicule (3) selon l'une quelconque des revendications précédentes, **caractérisé en ce qu'**au moins une autre section (6) avec la fonctionnalité de la deuxième section (6) est prévue.

6. Véhicule (3) selon l'une quelconque des revendications précédentes, **caractérisé en ce que** la deuxième section (6) est guidée par rapport à la première section (5) au moyen au moins d'une voie de déplacement prédéfinie par les moyens de liaison (7, 8).

7. Véhicule (3) selon l'une quelconque des revendications précédentes, **caractérisé en ce que** sont prévus des entraînements à moteur pour exécuter ou assister des opérations de déplacement.

8. Véhicule (3) selon l'une quelconque des revendications précédentes, **caractérisé en ce que** sont prévus des accumulateurs d'énergie et/ou des moyens d'amortissement pour homogénéiser l'au moins un déplacement.
